# EUROPEAN PATENT SPECIFICATION

(11) **EP 0 435 137 B1**
(45) Date of publication and mention of the grant of the patent: **28.07.1999**
(21) Application number: 90124601.7
(22) Date of filing: 18.12.1990
(51) Int. Cl.: G06K 7/08

(54) **Information card system**
Informationskartensystem
Système de carte d'information

(30) Priority: 19.12.1989 JP 33002789
(43) Date of publication of application: 03.07.1991
(60) Divisional application: 98124871.9
(73) Proprietor: SONY CORPORATION, Tokyo (JP)
(72) Inventor: Tanaka, Katsuyuki, Shinagawa-ku Tokyo (JP)
(74) Representative: Schmidt-Evers, Jürgen, Dipl.-Ing.

(56) References cited:
- EP-A- 324 564
- WO-A-87/06747
- GB-A- 2 210 715
- JP-A- 1 182 782

## Description

### BACKGROUND OF THE INVENTION

### FIELD OF THE INVENTION

The present invention relates to an information card system and particularly relates to an information card system which writes information in a non-contact manner.

### PRIOR ART

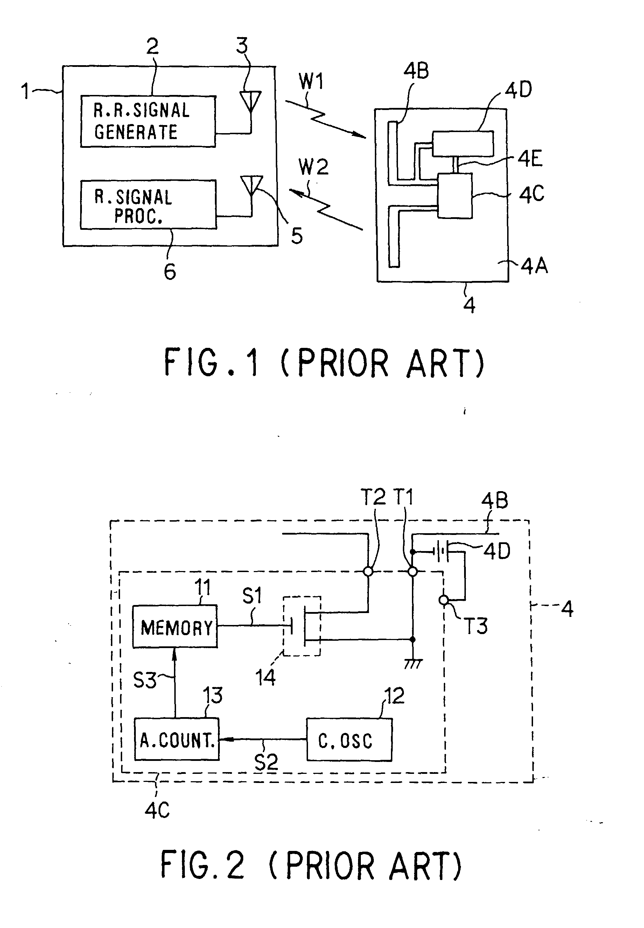

An example of the conventional information card reader which reads information of an information card is illustrated in FIG. 1. In the information card reader 1, a response requiring signal W1 using a microwave of 2.45 GHz, for example, as a carrier is generated in a response requiring signal generating circuit 2 and is emitted from a transmission antenna 3 to an information card 4. A response information signal W2 which is returned from the information card 4 is received in a response signal processing circuit 6 through a receiving antenna 5. In this manner, the information card reading system may be used for checking visitors, who have an information card 4 as an identification card or checking freight with the information card 4 as a tag.

EP-A-0 324 564 proposes the information card 4 which is used in such an information card reading system. In the information card 4, a dipole antenna 4B, an information signal generating circuit 4C and a power supply battery 4D are connected by a wiring pattern 4E. The dipole antenna 4B is mounted on the wiring board 4A to form part of the wiring pattern, and the information signal generating circuit 4C has an integrated circuit (IC) structure. The dipole antenna 4B changes its reflection ratio to the carrier, emitted as a response requiring signal W1 from the information reader 1, by changing the impedance between the feeding point terminals of the antenna according to an information signal generated in the information signal generating circuit 4C, and thereby the reflected wave is returned as a response information signal W2.

The information signal generating circuit 4C has an electric circuit configuration as shown in FIG. 2. Information data S1 previously stored in an information memory 11, a PROM for example, is read according to an address signal S3 of an address counter 13 which is actuated by a clock signal S2 of a clock signal generator 12, and the information data read is supplied to an variable impedance circuit 14 which is made of a field effect transistor.

The variable impedance circuit 14 is interconnected between a pair of feeding point terminals T1 and T2, and the dipole antenna 4B is connected to the feeding point terminals T1 and T2. Thus, impedance of the dipole antenna 4B between the feeding point terminals is variable controlled by performing on-off actuation of the field effect transistor when the information data S1 has logic "1" or "0", and thereby the reflection ratio to the response requiring signal W1 incident upon the dipole antenna 4B is variable controlled.

Interconnected between the earth side feeding point terminal T1 and a power supply terminal T3 of the information signal generating circuit 4C is a power supply battery 4D. This enables the impedance variable control at the feeding point of the dipole antenna 4B to be always continuously performed by the information data S1.

A specific identification code is allotted to the information memory 11 of each information card 4, and hence information contained in information cards 4 is positively read by the information reader 1.

To previously write information to the information card 4, it is proposed to bring electrodes of a writer into contact with electrodes of the information card 4. However, this method of writing information in the contact manner produces a problem that in mass production of the information card productivity is deteriorated due to the additional process of the direct contact.

To overcome this problem there is proposed a method in which electrode plates are formed on an information card to send and receive information. The plates are placed in the vicinity of plates formed on a separate writer to produce an electric coupling between them for sending and receiving information in a non-contact manner (Japanese Patent (unexamined) Laid-open Publication 63(1988)-39396). However, in both writing information to and reading information from the information card, the information card must be placed in the vicinity of the information reader since the information card uses the plates for writing and reading information. Thus, the information card is not sufficient in the point of facility.

From the WO 87/06747 a personal memory card with the size of a standard plastic credit card is known being usable in a variety of applications from custom repertory dialling to storage of individual medical and/oder banking records. The personal memory card includes a computer, an electrically erasable field-programmable read-only memory and also circuitry for inductively receiving a power signal and capacitive transferring data signals between the card and a card reader/writer located in a associated station. No direct ohmic electrical contact is made between the card and the reader/writer for transferring power to the card or for transferring data to and from the card. The card is also re-programmable by the associated station with new and different data as desired.

### SUMMARY OF THE INVENTION

Accordingly, it is an object of the present invention to provide an information card system which is capable of writing information in the information card in a non-contact manner with excellent facility. This object is achieved by means of a system with the features of claim 1.

It is another aspect of the present invention to provide an information card system which is capable of previously preventing deterioration in input waveform when the input signal is inputted by a static coupling.

It is still another aspect of the present invention to provide an information card system which is capable of reading data stored in an information card in a non-contact manner with a simple construction.

In view of these and other objects, the present invention provides an information card system comprising an information card storing information data therein and capable of receiving a signal from a card reader, transforming the signal in response to the information data and transmitting the transformed signal back to the card reader, and an information writer. The information card includes a pair of electrode plate means for receiving the information data, and means for storing said information data; the information writer includes information data generating means for generating the information data, and a pair of writing electrode plate means supplied with the information data and for generating an electrical field in cooperative with the pair of electrode plate means when the information card is moved toward the information writer, thereby the information data being written in the information card without any contact between the information card and the information writer.

### BRIEF DESCRIPTION OF THE DRAWINGS

In the drawings:
FIG. 1 is a block diagram illustrating the conventional information card system;
FIG. 2 is a block diagram showing in more detail the information signal generating circuit of FIG. 1;
FIG. 3 is a block diagram showing an information card system in accordance with a first embodiment of the present invention;
FIG. 4 is a perspective view of the information card system of FIG. 3;
FIGS. 5A and 5B are waveform charts illustrating the operation of the information card system of FIG. 3;
FIG. 6 is a block diagram showing an information card system in accordance with a second embodiment of the present invention;
FIG. 7 is a perspective view of the information card system of FIG. 6;
FIGS. 8A, 8B and 8C are waveform charts illustrating the operation of information card system of FIG. 6;
FIG. 9 is a block diagram showing an information card system in accordance with a third embodiment of the present invention;
FIGS. 10A to 10D are waveform charts illustrating the operation of information card system of FIG. 9; and
FIG. 11 is a block diagram showing an information card reader of the present invention.

### DETAILED DESCRIPTION OF THE PREFERRED EMBODIMENTS

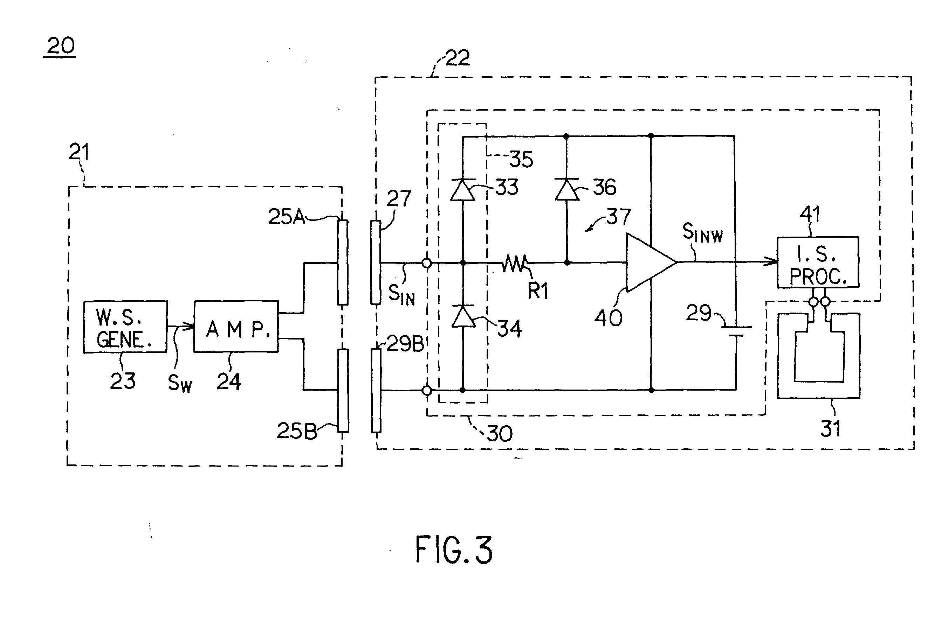

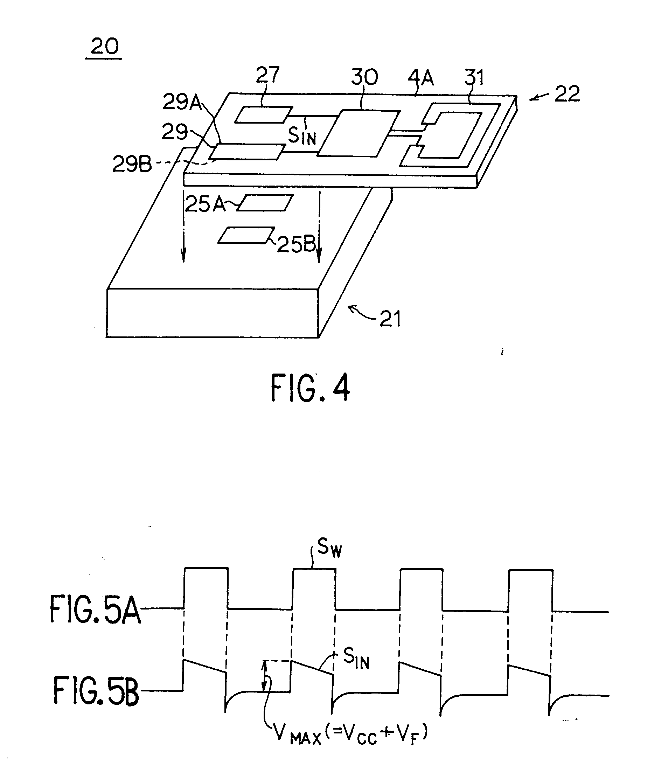

Referring to FIGS. 3 and 4, an information card system 20 of the present invention will be described. The information card system 20 includes an information card 22 and an information writer 21 for writing information in the information card 22. In the information writer 21, a write signal generating circuit 23 produces a write information signal S_{W} according to a predetermined information data and sends it as a baseband signal to writing electrodes 25A and 25B through an amplifying circuit 24. Thus, a change in voltage is produced between the writing electrodes 25A and 25B in response to the write information signal S_{W}.

As shown in FIG. 4, the information card 22 includes a printed wiring board 4A which mounts a plate 27, a power supply battery 29 and an integrated circuit 30 on it. The plate 27 and the power supply battery 29 are connected to the integrated circuit 30 through a wiring pattern, and the information card 22 is sealed at the front with a sealing sheet material.

The power supply battery 29 is a so-called paper battery in the shape of a rectangular thin sheet 20 mm wide and 30 mm long, and the power supply battery 29 has a front electrode surface 29A as a positive electrode and a rear electrode surface 29B as a negative electrode.

The plate 27 is in the shape of a rectangle 8 mm wide and 15 mm long and constitutes part of the wiring pattern. The plate 27 and the power supply battery 29 are provided on the front of the information card 22 at the same level so that the plate 27 and the power supply battery 29 oppositely face the writing electrodes 25A and 25B respectively when the information card 22 is placed in the vicinity of the information writer 21. Thus, the electrode surface 29B and the plate 27 are used as plates for inputting data. When the information card 22 is placed close to the information writer 21 at a predetermined interval, the writing electrodes 25A and 25B of the information writer 21 and the plate 27 and the electrode surface 29B of the information card 22 may produce electric fields respectively. Thus, an electric field is generated by a write information signal S_{W} which is inputted to the writing electrode 25A with a reference potential of the writing electrode 25B, so that an input information signal S_{IN} is produced at the plate 27 in response to the write information signal S_{W} with a reference potential of the electrode surface 29B. In this manner, the write information signal S_{W} is transmitted to the information card 22 as the input information signal S_{IN} in a non-contact fashion.

The input information signal S_{IN} is, as shown in FIG. 3, inputted to an amplifier circuit 40 of a complementary MOS through a clipper 35 and a current limiting circuit 37. The clipper 35 includes diodes 33 and 34 while the current limiting circuit 37 contains a resistance R1 and a diode 36. The input information signal S_{IN} is amplified by the amplifier circuit 40 with the power supply battery 29 and is then sent as an input write signal S_{INW} to an information signal processing circuit 41 for storing as an information data. Thus, the write information signal S_{W} is sent from the information writer 21 to the information card 22 in the non-contact manner and is stored in the information card 22 as information data.

On the printed wiring board 4A of the information card 22, there is mounted a loop-shaped electrode pattern 31 in addition to the plate 27 and the power supply battery 29. The electrode pattern 31 is connected through a wiring pattern to an information signal generating circuit 4C (FIG. 2) arranged within the information signal processing circuit 41.

The electrode pattern 31 changes in impedance in response to an information data from the information signal generating circuit 4C. An induction electric field is produced by placing the electrode pattern 31 close to an information reading coil of an information reader (not shown), and thereby the information data from the information signal generating circuit 4C is transmitted to the information reader in a non-contact manner. The electrode pattern 31 is formed with a length of one wavelength of a microwave, and hence the electrode pattern 31 reflects a response requiring signal W1 (FIG. 1) which is sent from the information reader with the microwave as a carrier, at a predetermined reflection coefficient to thereby send a response information signal W2. Thus, the information data of the information signal generating circuit 4C is sent in the non-contact manner using microwave.

In the information card system 20, information data stored in the information card 22 are read by the proximity information reader according to inductive coupling. Moreover, a remote information reader such as the information reader 1 in FIG. 1 can read the information data of the information card 22. The information card 22 may be built as a proximity read card or a remote read card according to the need.

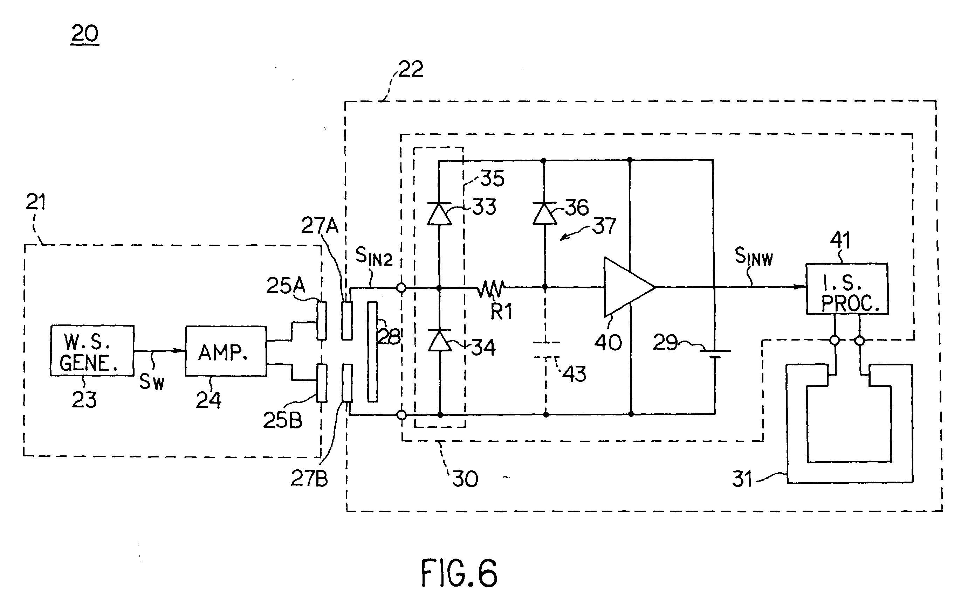

To write the write information signal S_{W} of the information writer 21 to the information card 22, the information card 22 is brought close to the information writer 21 so that the writing electrodes 25A and 25B are placed at an interval of several mm from the plate 27 and the electrode surface 29B, respectively. In this event, the write information signal S_{W} from the write signal generating circuit 23 is sufficiently amplified through the amplifying circuit 24, and electric fields are produced between the writing electrode 25A and the plate 27 and between the writing electrode 25B and the electrode surface 29B. Thus, the write information signal S_{W} shown in FIG. 5A is inputted to the plate 27 of the information card 22 in the non-contact manner using static coupling.

In this event, the cathode of the diode 33 of the clipper 35 is maintained at a supply voltage V_{CC} since the cathode is connected to the positive electrode of the power supply battery 29. When the input information signal S_{IN} exceeds a voltage level V_{MAX} which is equal to a forward direction operating voltage V_{F} of the diode 33 added to the supply voltage V_{CC} of the power supply battery 29, the diode 33 is turned on, and the input information signal S_{IN} is thereby restricted in amplitude.

On the other hand, the anode of the diode 34 is held at the reference voltage, and when the input information signal S_{IN} drops below the reference voltage, the diode 34 is hence turned on, so that the amplitude of the input information signal S_{IN} is also limited in the low level side.

As shown In FIG. 5B, the input information signal S_{IN} is thus limited in amplitude to a predetermined signal level and is subsequently limited in current by the resistance R1 and the diode 36 of the current limiting circuit 37. Then, the input information signal S_{IN} is inputted to the amplifier circuit 40, from which the input write signal S_{INW} is sent to the information signal processing circuit 41, where the signal undergoes a predetermined signal processing and is then stored in the memory. In this manner, the amplifier circuit 40 and the information signal processing circuit 41 are protected even if the input information signal S_{IN} is inputted at an excessively large signal level. Thus, the write information signal S_{W} from the information writer 21 is positively written in the information card 22 in a non-contact manner.

In the information card system 20, the input write signal S_{INW} according to the write information signal S_{W} is positively written in the information card 22 in the non-contact fashion in the following manners:
electric fields are produced between the writing electrode 25A and the plate 27 and between the writing electrode 25B and the electrode surface 29B; the information signal S_{W} is amplified by the amplifying circuit 24 of the information writer 21 to produce the input information signal S_{IN} at a signal level required for the static coupling; the input information signal S_{IN} is limited in amplitude by the clipper 35 of the information card 22; and the input information signal S_{IN} is limited in current by the current limiting circuit 37.

In the embodiment above described, the negative electrode surface 29B of the power supply battery 29 is used as a signal input electrode plate, and thereby the wiring board 4A is fairly effectively used in space. This enables the information card 22 to be miniaturized.

In the information card system 20, the information card 22 uses the 8 mm x 15 mm rectangular plate 27 and the 20 mm x 30 mm rectangular electrode surface 29B, but the plate 27 and the electrode surface 29B may have various sizes and configurations. To meet the plate 27 and the electrode surface 29B, the writing electrodes 25A and 25B of the information writer 21 are changed in configuration and size.

In the information card system 20, information is written in the information card 22 by static coupling, but the present invention is not limited to this. Remote writing of information in the information card 22 using microwave may be achieved by forming the plate 27 and the electrode surface 29B to each have a length equal to half the wavelength of the microwave.

The information of the information card 22 of the embodiment is read by both a proximity information reader and a remote information reader. The former reads information from the information card 22 by the electrode pattern 31 according to inductive coupling, and the latter uses microwave. The information card 22 may be only for the proximity information reader or the remote information reader.

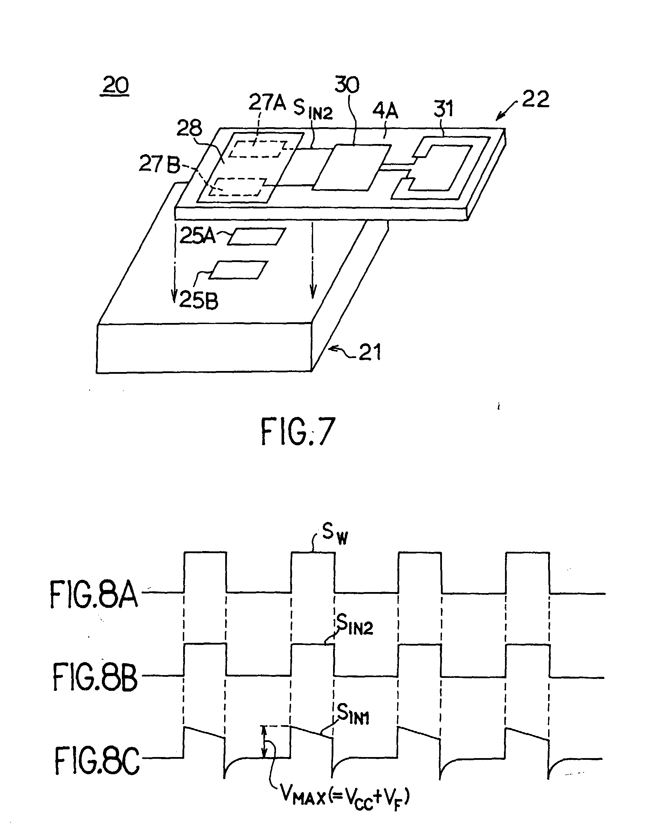

Referring to FIGS. 6 and 7, another embodiment of the present invention will be described. In FIG. 6, parts corresponding to the parts of FIGS. 3 and 4 are designated by the same reference numerals. The information writer 21 of FIG. 6 is identical in construction as the information writer 21 in FIG. 3, and the description thereof is hence omitted.

As shown In FIG. 7, the information card 22 has plates 27A and 27B and a loop-shaped electrode pattern 31 mounted on a printed wiring board 4A. The plates 27A and 27B and the electrode pattern 31 are connected to the integrated circuit 30 to form parts of a wiring pattern, and the information card 22 is sealed at the front with a sealing sheet.

A plate 28 is provided to oppositely face the upper surfaces of the plates 27A and 27B at predetermined intervals for adding capacity. The plate 28 is formed to cover the plates 27A and 27B. An insulating film, such as a paper, is placed between the plate 28 and the plates 27A and 27B to keep a predetermined interval for providing predetermined capacities, respectively.

The plates 27A and 27B are in the shape of a rectangle about 8 mm wide and about 15 mm long. The plates 27A and 27B oppositely face the writing electrodes 25A and 25B respectively when the information card 22 is placed in the vicinity of the information writer 21. Thus, the plates 27A and 27B are used as electrode plates for inputting data. When the information card 22 is placed close to the information writer 21 at a predetermined interval, the writing electrodes 25A and 25B of the information writer 21 and the plates 27A and 27B may produce electric fields respectively. Thus, an electric field is generated by a write information signal S_{W} which is inputted to the writing electrode 25A with a reference potential of the writing electrode 25B, so that an input information signal S_{IN2} is produced at the plate 27A in response to the write information signal S_{W} with a reference potential of the plate 27B.

The input information signal S_{IN2} is, as shown in FIG. 6, inputted led to a clipper 35 including diodes 33 and 34. This clipper 35 operates in the same manner as the clipper 35 of FIG. 3, and the description thereof is hence omitted. The other construction of the information card 22 is the same as that of the information card 22 of the preceding embodiment, and the description thereof is also omitted.

To write the write information signal S_{W} of the information writer 21 to the information card 22 in the second embodiment, the information card 22 is brought close to the information writer 21 so that the writing electrodes 25A and 25B are placed at an interval of several mm from the plates 27A and 27B, respectively. In this event, the write information signal S_{W} from the write signal generating circuit 23 is sufficiently amplified through the amplifying circuit 24, and electric fields are produced between the plate 27A and the writing electrode 25A and between the plate 27B and the writing electrode 25B. Thus, the write information signal S_{W}, shown in FIG. 8A, is inputted to the plate 27A of the information card 22 in the non-contact manner using static coupling.

The plate 28 provides additional capacitances to the plates 27A and 27B. Thus, the time constant of the input capacitance 43 which is produced in the integrated circuit 30 increases by the additional capacitances of the plates 27A and 27B. As a result, as shown in FIG. 8B, an input information signal S_{IN2} is inputted to the amplifier circuit 40 in the waveform similar to the waveform of the write information signal S_{W} without producing little waveform distortion as in FIG. 8C. Then, the resultant input write signal S_{INW} is sent to the information signal processing circuit 41, where the input write signal S_{INW} undergoes the signal processing at a predetermined level of a threshold value and is then stored in the memory. In this manner, the write information signal S_{W} which has been sent from the information writer 21 is inputted to the information card 22 in a non-contact manner and is positively stored in it as an information data.

In the second embodiment, the provision of the plate 28 to face the plates 27A and 27B for additional capacitances enables information data to be positively written in the information card 22 from the information writer 21 in the non-contact manner with little waveform distortion in the input information signal S_{IN2}.

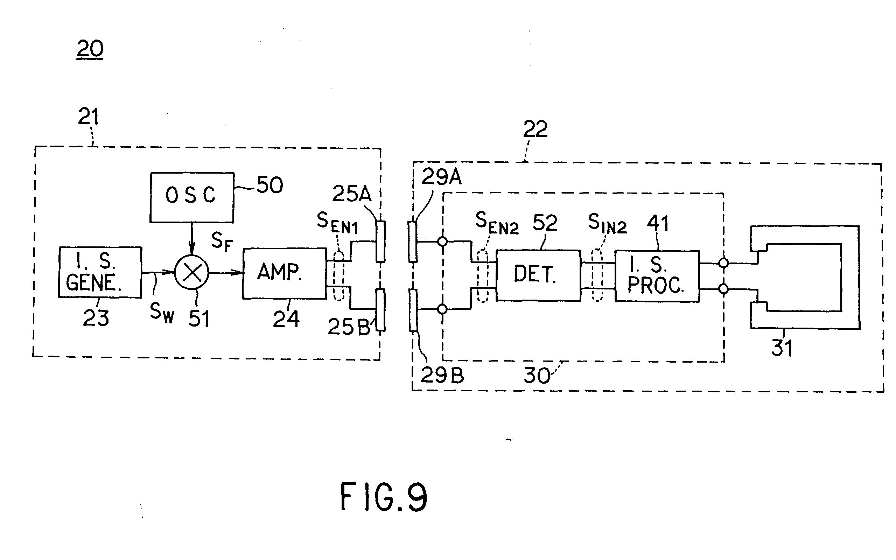

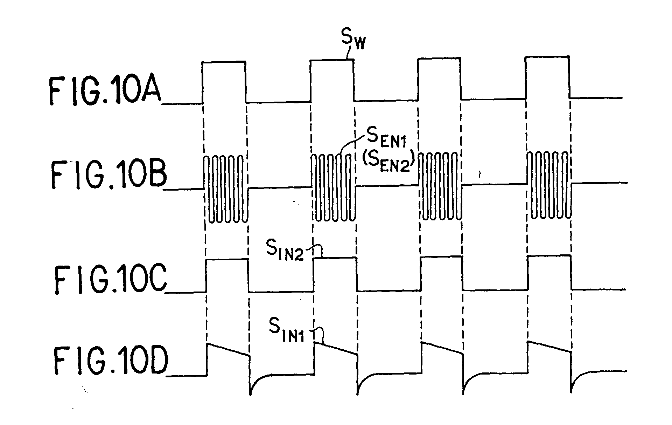

A third embodiment of the present invention will be described with reference to FIGS. 9 and 10. In FIG. 9, parts corresponding to parts of FIG. 3 are designated by the same reference numerals.

In FIG. 9, an information writer 21 of an information card system 20 includes a write signal generating circuit 23 where a write information signal S_{W} (FIG. 10A) is produced according to a predetermined information data, and the write information signal S_{W} is sent as a baseband signal to a multiplier circuit 51 at a data transfer speed of 100 kbps, for example. On the other hand, a frequency generating circuit 50 inputs a reference frequency signal S_{F} of a high frequency 100 MHz, for example, to the multiplier circuit 51, and thereby the reference frequency signal S_{F} is amplitude modulated according to the write information signal S_{W} to produce a modulated signal S_{EN1} (FIG. 10B), which is sent to writing electrodes 25A and 25B through an amplifying circuit 24. As a result, changes in voltage are produced between the writing electrodes 25A and 25B in response to the modulated signal S_{EN1}.

In the third embodiment, the information card of the structure shown In FIG. 4 may be used as the information card 22. In the information card 22, an input modulated signal S_{EN2} is produced in a plate 29A in response to the modulated signal S_{EN1}, with a reference voltage of another plate 29B. The input modulated signal S_{EN2} is sent to a detector circuit 52 including a diode to perform envelope detection, so that as shown in FIG. 10C an input information signal S_{IN2} is produced in response to the write information signal S_{W}. The input information signal S_{IN2} is transmitted to an information signal processing circuit 41 for predetermined signal processing and is then stored as an information data in a memory in the information signal processing circuit 41. The information card 22 of the third embodiment is identical in the other parts to the information card 22 of FIG. 3, and the description thereof is hence omitted.

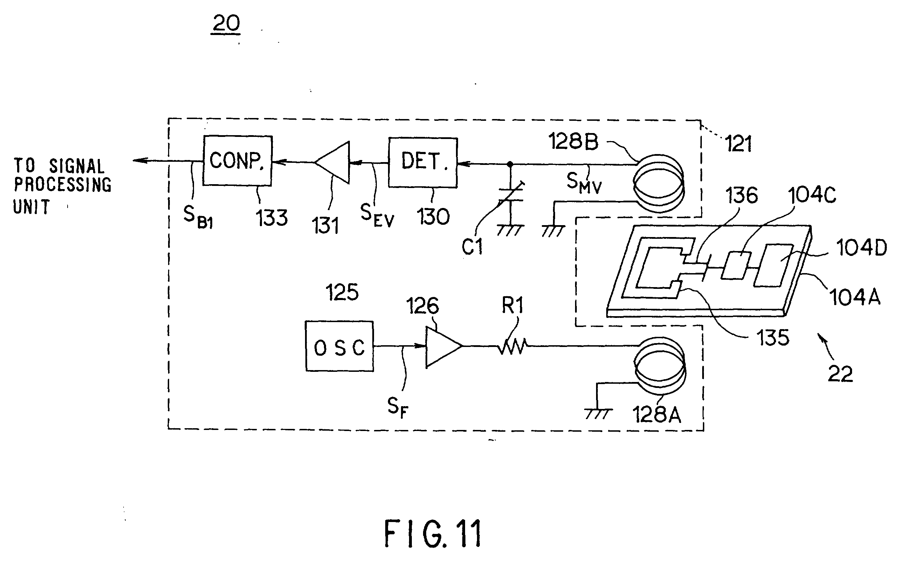

Referring to FIG. 11, an information reader according to the present invention which reads data, saved in the manner above stated, will be described. In FIG. 11, an information card system 20 includes an information reader 121 and an information card 22. The information reader 121 is provided with a frequency generating circuit 125 which sends a reference signal S_{F} of a predetermined frequency higher than several MHz to a magnetic field generating coil 128A through an amplifier circuit 126 of a TTL (transistor transistor logic) circuit configuration and a resistance R2.

The information reader 121 further includes a reading coil 128B arranged at a position opposing to the magnetic field generating coil 128A at a predetermined interval of several centimeters. When an induction field is produced between the magnetic field generating coil 128A and the reading coil 128B by inputting the reference signal S_{F} of the predetermined frequency to the magnetic field generating coil 128A, an electromotive force is induced in the reading coil 128B by mutual induction. The induced electromotive force is sent as a read signal S_{MV} to a detection circuit 130 through a tuning capacitor C1.

The detection circuit 130 obtains a detected signal S_{EV} by performing envelope detection at the signal level (voltage level) of the read signal S_{MV} and sends it to a comparison circuit 133 through an amplifier circuit 131.

The comparison circuit 133 converts the detected signal S_{EV} to a binary signal S_{BI} at a predetermined signal level and then transmits the binary signal S_{BI} to a subsequent signal processing unit (not shown).

The magnetic field generating coil 128A and the reading coil 128B are spaced, and the information card 22 is inserted into the spacing.

In the information card 22 of FIG. 11, an electrode pattern 135 is attached to a wiring board 104A to substantially form a 30 mm x 37 mm rectangular loop. A field effect transistor 136 is connected to the electrode pattern 135 at opposite ends of the latter as feeding points. The electrode pattern 135, the field effect transistor 136, an information signal generating circuit 104C and a power supply battery 104D are connected through a wiring pattern. The field effect transistor 136 is on-off controlled according to an information signal sent from the information signal generating circuit 104C, and thereby the loop of the electrode pattern 135 is opened or closed.

When in the information card system 20 of FIG. 11, a reference signal S_{F} of a frequency 20 MHz, for example, is inputted to the magnetic field generating coil 128A, current flowing in the magnetic field generating coil 128A changes in response to the reference signal S_{F}, so that an induction field is generated between the magnetic field generating coil 128A and the reading coil 128B to produce an induced electromotive force in the reading coil 128B.

In this event, the information card 22 is inserted in to the space between the magnetic field generating coil 128A and the reading coil 128B to face the electrode pattern 135 of the information card 22 to the magnetic field generating coil 128A and reading coil 128B, and induced current thus flows in the electrode pattern 135 of the information card 22 only while the electrode pattern 135 is controlled to form a closed loop by turning on the field effect transistor 136. As result, there is generated a magnetic flux opposite in direction to the magnetic flux which is generated between the magnetic field generating coil 128A and the reading coil 128B, so that the number of the magnetic flux which passes through the reading coil 128B decreases. Thus, the electromotive force induced in the reading coil 128B reduces, so that the signal level (amplitude) of the read signal S_{MV} becomes smaller. This change in amplitude is detected by envelope detection in the detection circuit 130 and thereby a detected signal S_{EV} which changes in signal level according to information data of the information card 22 is provided. Thus, a binary signal S_{BI} which changes according to the information data of the information card 22 is obtained by converting the detected signal S_{EV} to a binary signal in the comparison circuit 133. The binary signal S_{BI} is sent to the subsequent signal processing unit to apply a predetermined signal processing, and thereby information data of the information card 22 can be read in a non-contact manner.

Information data of the information card of FIG. 11 is positively read by detecting the detected signal S_{EV} in the most sensitive condition by tuning the tuning capacitor C1.

In the information card system 20 of FIG. 11, the loop of the electrode pattern 135 is opened or closed in response to information data of the information card 22, and thereby a change of the induction field between the magnetic field generating coil 128A and the reading coil 128B is detected on the side of the information reader 121, so that the information reader 121 reads information data of the information card 22 in the non-contact manner.

## Claims

1. An information card system comprising an information card (22) storing information data therein and capable of receiving a signal from a card reader (1, 21), transforming said signal in response to said information data and transmitting the transformed signal back to said card reader, and an information writer (21); wherein:
said information card (22) includes a pair of electrode means (27, 29B) for receiving the information data, and means for storing said information data;
said information writer (21) includes information data generating means (23) for generating the information data, and a pair of writing electrode means (25A, 25B) supplied with said information data,
characterized in that the electrode means and the writing electrode means are electrode plate means (27, 29B) and writing electrode plate means (25A, 25B), respectively, the writing electrode plate means (25a, 25b) generates an electrical field in cooperation with said pair of electrode plate means (27, 29B) when said information card (22) is moved toward said information writer (21), thereby said information data being written in said information card (22) without any contact between said information card (22) and said information writer (21), and said information card (22) includes power supply battery means (29) having a pair of electrodes, one of said electrodes forming one (29B) of said electrode plate means.

2. An information card system according to claim 1, wherein said information card (22) includes third electrode plate means (28) positioned with respect to said pair of electrode plate means (27A, 27B) so as to form capacitance component therebetween.

3. An information card system according to anyone of claims 1 or 2, wherein said information writer (21) includes modulating means (51) for modulating a carrier by said information data, and said information card (22) includes detector means (52) supplied with the received modulated signal and regenerating said information data.

## Patentansprüche

1. Informationskartensystem mit einer Informationskarte (22), auf der Informationsdaten gespeichert sind und die ein Signal von einem Kartenleser (1, 21) empfangen, das Signal in Abhängigkeit von den Informationsdaten transformieren und das transformierte Signal zu dem Kartenleser zurücksenden kann, sowie mit einem Informationsschreiber (21), wobei
die Informationskarte (22) ein Paar von Elektroden (27, 29b) zum Empfangen der Informationsdaten und Mittel zur Speicherung der Informationsdaten aufweist,
der Informationsschreiber (21) eine Informationsdaten-Generatoreinrichtung (23) zum Erzeugen der Informationsdaten und zwei Schreib-Elektroden (25A, 25B) aufweist, denen die Informationsdaten zugeführt werden,
**dadurch gekennzeichnet,**
daß die Elektroden und die Schreib-Elektroden als Elektrodenplatten (27, 29B) bzw. Schreib-Elektrodenplatten (25A, 25B) ausgebildet sind,
daß die Schreib-Elektrodenplatten (25A, 25B) zusammen mit dem Paar von Elektrodenplatten (27, 27B) ein elektrisches Feld erzeugen, wenn die Informationskarte (22) in Richtung auf den Informationsschreiber (21) bewegt wird, und dadurch die Informationsdaten ohne irgendeinen Kontakt zwischen der Informationskarte (22) und dem Informationsschreiber (21) in die Informationskarte (22) eingeschrieben werden,
und daß die Informationskarte (22) eine Stromversorgungsbatterie (29) mit zwei Elektroden enthält, wobei eine dieser Elektroden eine (29B) der genannten Elektrodenplatten bildet.

2. Informationskartensystem nach Anspruch 1, bei dem die Informationskarte (22) eine dritte Elektrodenplatte (28) aufweist, die relativ zu dem Paar von Elektrodenplatten (27A, 27B) so angeordnet sind, daß zwischen ihnen eine kapazitive Komponente gebildet wird.

3. Informationskartensystem nach einem der Ansprüche 1 oder 2, bei dem der Informationsschreiber (21) eine Modulatoreinrichtung (51) zum Modulieren eines Trägers mit den Informationsdaten aufweist und daß die Informationskarte (22) eine Detektoreinrichtung (52) aufweist, der das empfangene modulierte Signal zugeführt wird und die die Informationsdaten regeneriert.

## Revendications

1. Système de carte d'information comprenant une carte d'information (22) mémorisant des données d'information et capable de recevoir un signal provenant d'un lecteur de carte (1, 21), de transformer ledit signal en réponse auxdites données d'information et de transmettre le signal transformé de retour vers ledit lecteur de carte, et un dispositif d'écriture d'information (21) ; dans lequel :
ladite carte d'information (22) comprend deux moyens formant électrodes (27, 29B) pour recevoir les données d'information, et des moyens pour mémoriser lesdites données d'information ;
ledit dispositif d'écriture d'information (21) comprend des moyens de génération de données d'information (23) pour générer les données d'information, et deux moyens formant électrodes d'écriture (25A, 25B) qui reçoivent lesdites données d'information,
caractérisé en ce que lesdits moyens formant électrodes et les moyens formant électrodes d'écriture sont, respectivement, des moyens formant plaques d'électrodes (27, 29B) et des moyens formant plaques d'électrodes d'écriture (25A, 25B), les moyens formant plaques d'électrodes (25A, 25B) génèrent un champ électrique en coopération avec lesdits deux moyens formant plaques d'électrodes (27, 29B) lorsque ladite carte d'information (22) est déplacée vers ledit dispositif d'écriture d'information (21), lesdites données d'information étant, de ce fait, écrites dans ladite carte d'information (22) sans aucun contact entre ladite carte d'information (22) et ledit dispositif d'écriture d'information (21), et ladite carte d'information (22) comprend des moyens formant batterie d'alimentation (29) comportant deux électrodes, l'une desdites électrodes formant l'un (29B) desdits moyens formant plaques d'électrodes.

2. Système de carte d'information selon la revendication 1, dans lequel ladite carte d'information (22) comprend des troisièmes moyens formant plaque d'électrode (28) positionnés par rapport auxdits deux moyens formant plaques d'électrodes (27A, 27B) de manière à former un composant capacitif entre eux.

3. Système de carte d'information selon l'une quelconque des revendications 1 ou 2, dans lequel ledit dispositif d'écriture d'information (21) comprend des moyens de modulation (51) pour moduler une porteuse par lesdites données d'information, et ladite carte d'information (22) comprend des moyens de détection (52) qui reçoivent le signal modulé reçu et qui régénèrent lesdites données d'information.
